(19) Europäisches Patentamt
European Patent Office
Office européen des brevets

(11) Publication number: **0 461 078 A2**

(12) # EUROPEAN PATENT APPLICATION

(21) Application number: **91810426.6**

(22) Date of filing: **04.06.91**

(51) Int. Cl.⁵: **G05B 23/02, D03D 51/00**

---

(30) Priority: **04.06.90 JP 146421/90**

(43) Date of publication of application:
**11.12.91 Bulletin 91/50**

(84) Designated Contracting States:
**BE DE FR IT**

(71) Applicant: **Kabushiki Kaisha Toyoda
Jidoshokki Seisakusho
1, Toyoda-cho 2-chome, Kariya-shi
Aichi-ken 448 (JP)**

(72) Inventor: **Endo, Takashi, c/o Kabushiki Kaisha
Toyoda
Jidoshokki Seisukusho, 1, Toyoda-cho
2-chome
Kariya-shi, Aichi-ken (JP)**
Inventor: **Arakawa, Akio, c/o Kabushiki Kaisha
Toyoda
Jidoshokki Seisukusho, 1, Toyoda-cho
2-chome
Kariya-shi, Aichi-ken (JP)**

(74) Representative: **Hammer, Bruno, Dr.
c/o Gebrüder Sulzer AG, KSR/Patente/0007
CH-8401 Winterthur (CH)**

---

(54) **Loom diagnosis system.**

(57) The loom failure diagnosis system comprises a loom information collecting device or computer (Ci) which receives (5) and stores loom operation information like data regarding speed, weft yarn breaks, warp yarn breaks, main and or axilliary nozzle pressure, warp let-off control and the like. The loom information collecting further receives information regarding said operating data of the loom (Li) by detecting means like sensors (1, 2). The information collecting device is able to decide on whether the loom is operating normal or abnormal. The system further comprises an expert device or computer (E) that contains information regarding correct setting of the loom. The information collecting computer (Ci) and the expert computer (E) are interconnected. The expert computer (E) has the ability to ask for information from the loom information collecting computer (Ci) and based on this information, to specify the causes for abnormal operation of the loom. The system allows for easy detection of improperly set operation parameters of the loom (Li).

EP 0 461 078 A2

F i g. 1

The present invention relates to a loom diagnosis system in particular a system for the diagnosis of weft picking failures.

Where failures of weft picking take place frequently in a jet loom, there has sometimes been a case in which the failures result from the erroneous setting of ja jet period or pressure on the weft picking nozzle but it is considerably difficult for one to specify the cause of such failures unless he is a skilled person. For this reason, an electronic computer (or expert computer) for specifying the cause has been developed such that when the necessary information is inputted to the expert computer, the computer infers to specify the cause on the basis of the inputted information. In this case, the expert computer makes a demand for the display of information required for it to specify the cause.

The information demanded to be displayed is required to be picked up from a loom control computer by the loom operator and the information thus picked up is transmitted to the expert computer operator by telephone but this inputting system requires much time and labor and moreover, it tends to be accompanied with a mistake.

An object of the present invention is to provide a loom diagnosis system with which the inputting of necessary information is facilitated and no erroneous inputting of information takes place.

According ot the present invention this problem is solved by the teaching contained in claims 1 or 2. The depending claims are related to particular embodiments of the invention.

In order to achieve the object, the loom diagnosis system according to the present invention is formed of a loom informatin collecting computer which receives and stores through detecting means loom operation information such as a weft breakage, failure of weft picking and etc., and at the same time, stores data on weaving conditions such as a weft control factor, warp let-off control factor and etc., and an expert computer connected to the loom information collecting computer through communication circuits and adapted to infer the cause of loom abnormality on the bases of the weaving conditions. Further, the loom information collecting computer is made to have a first data transmission fuction which judges whether or not there exists a loom abnormality and when the presence of such abnormality is adjudged, transmits to the expert computer abnormality information while the expert computer is made to have a function of transmitting question information to the loom information collecting computer in response to the loom abnormality information from the latter and the loom information collecting computer is also made to have a second data transmission function of transmitting answer information to the expert computer in response to the question information from the latter.

As described, the present invention has such excellent effects that since it has established a system in which abnormality generating information with respect to a loom and information required for the pursuit of the cause of abnormality is transmitted directly from an information collecting computer arranged for each loom to an expert computer, the exchange of information between the expert computer arid the information collecting computer is facilitated, the erroneous inputting of information rarely takes place and the diagnosis of a loom abnormality can be performed quickly and accurately.

When the loom information collecting computer judges the presence of a loom abnormality on the basis of loom operation informatin, it transmits loom abnormality information to the expert computer which in turn begins to raise a question in response to the loom abnormality information transmitted thereto. This question information is transmitted to the loom information collecting computer which in turn transmits to the expert computer the necessary information in response to the question information. Then the expert computer performs an inference for specifying the cause of the abnormality on the basis of this information and raises questions until the cause of the abnormality is finally specified. Thus, by such data transmitting and receiving function of the loom information collecting computer, the inputting of information to the expert computer is performed in a simple manner and with few mistakes.

An example of the diagnosis system according to the invention is described on behalf of the drawings.

Fig. 1 is a circuit diagram showing one embodiment of the pesent invention;

Fig. 2 is a flow chart representing a communication control and diagnostic program used in the embodiment of Fig. 1;

Fig. 3 is a circuit diagram showing another embodiment of the present invention;

Fig. 4 is a flow chart representing a communication control and diagnostic program used in the embodiment of Fig. 3;

Fig. 5 ist a circuit diagram showing still another embodiment of the present invention; and

Fig. 6 is a flow chart representing a communication control and diagnosti program used in the embodiment of Fig. 5.

In the drawings, the following references stand for the following:

reference letter E designates an expert computer, reference letter Ci designates a loom control computer serving as an information collecting computer, reference letters T1 and T2 designate communicaton control computers constituting communication circuits and reference letter R designates a public communiation line.

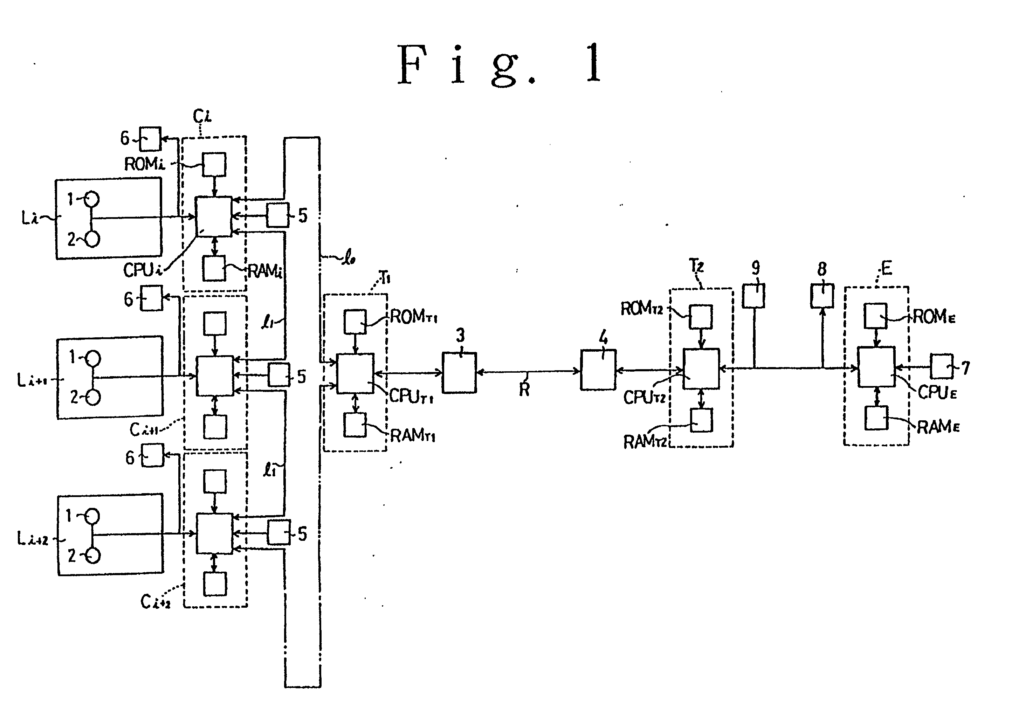

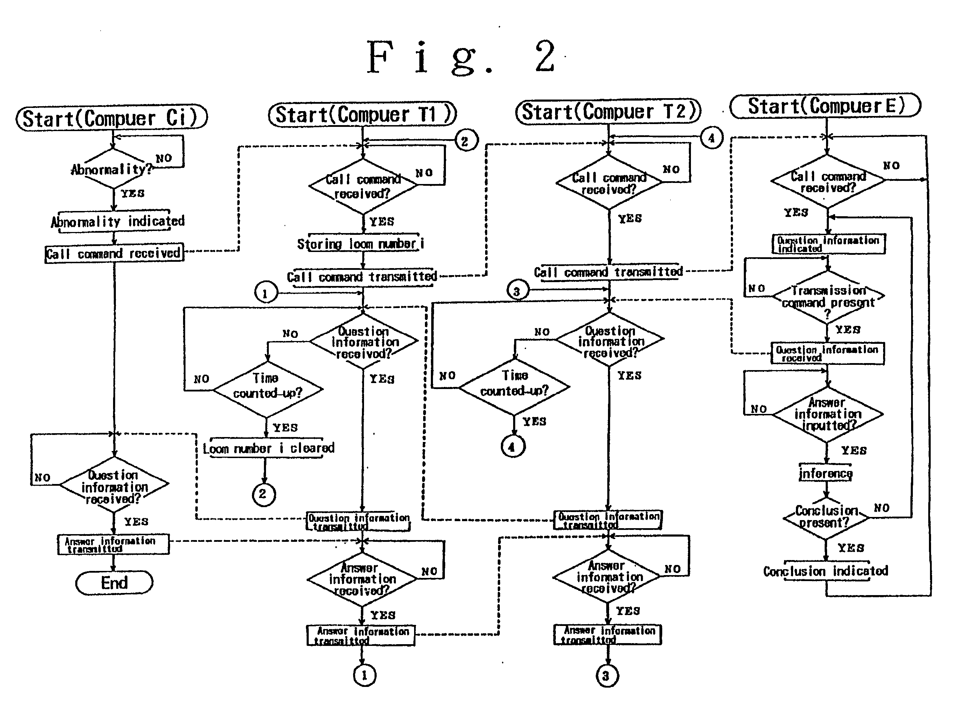

One embodiment of the present invention when applied to a jet loom will now be described with reference to Figs. 1 and 2.

As shown, a plurality of loom control computers Ci ($i$ = 1, 2, 3, ...) each comprising a central processing unit CPUi, program memory ROMi and data memory RAMi are respectively assigned to a plurality of looms Li ($i$ = 1, 2, 3, ...) and connected to a communication control computer Ti through a loop formed of signals lines $l_0$ and $l_1$.

To the loom control computer Ci there is connected a data input unit 5 and to the data memory RAMi of the computer Ci there are inputted through the data input unit 5 data on weaving conditions such as opening and closing timings for the main and auxiliary nozzle control electromagnetic valves for weft picking. The loom control computer Ci controls the loom Li on the bases of these inputted data. Further, the loom control computer Ci receives and stores loom operation information on a weft breakage through a weft breakage detecting unit 1 and information on a failure of weft picking through a weft detector 2. That is, the loom control computer Ci serves as a loom information collecting computer at the same time. Further, it is connected with a display unit 6.

The communication control computer T1 which comprises a central processing unit $CPU_{T1}$ and Data memory $RAM_{T1}$ is connected to a public communication line R through a modem 3 and an expert computer E is connected to the line R through a communication control computer T2 and a modem 4. Further, the expert computer E which comprises a central processing unit $CPU_E$, program memory $ROM_E$ is connected with a data input unit 7, a display unit 8 and a commuication control operating unit 9 of which the display unit 8 and communication control operating unit 9 are also connected to the communication control computer T2 which comprises a central processing unit $CPU_{T2}$, program memory $ROM_T2$ and data memory $RAM_{T2}$.

In the program memory ROMi of the loom control computer Ci there is stored as an input a data transmission and reception program shown in a flow chart of Fig. 2 and in the program memory $ROM_E$ of the expert computer E there is stored as an input a loom diagnostic program shown in the same flow chart.

The loom control computer Ci functions such that when, for example, a predetermined number of weft picking failures take place within a predetermined number of weft picking operations, is jedges the presence of an abnormality and transmits information on such "weft picking abnormality" to the communication control computer T1 side by side with the number "i" assigned to the loom. Then the communication control computer T1 stores the loom number "i" and at the same time, transfers the "weft picking abnormality" information to the communication control computer T2 wich in turn transfers it to the expert computer E. The expert computer E receives this "weft picking abnormality" information as a call command and allows first "question information" corresponding to the content of such abnormality to be displayed on the display unit 8 by reading it from the data memory $RAM_E$.

The operator of the expert computer E operates the communication control operating unit 9 in order to allow the first "question informatin" displayed on the display unit 8 to be transmitted to the communication control computer T1 through the communication control computer T2 and the computer T1 transfers the first "question information" to the loom control computer Ci of the loom whose number "i" is stored therein. Upon receiving the first "question information", the loom control computer Ci reads the necessary information (weaving conditions) from the data memory RAMi and transmits it to the communication control computer T1. These weaving conditions include, for example, the yarn number count of weft, weaving width, machine rotation speed, weft picking nozzle jet timing and etc. The communication control computer T1 transfers to the communication control computer T2 first "answer information" ("N-rpm") with respect to the first "question informatin" (for example, "What is the machine rotation speed?") while the computer T2 allows the first "answer information" to be displayed on the display unit 8 upon reception thereof. When the operator of the expert computer E receives the first "answer information" displayed on the display unit 8 through the data input unit 7, the expert computer E begins to infer the cause of the "weft picking abnormality" and when no conclusion is obtained from the first "answer information" that the cause of abnormality has been specified, the expert computer raises a second question so that the transmission and reception of information between the expert computer E and the loom control computer Ci and the inference by the computer E are performed. The above operation is repeated until a cvonclusion is drawn and when it is actually drawn, the expert computer E allows the "conclusion information" to be displayed on the display unit 8 and comes to stand ready for a new call command.

The "conclusion information" displayed on the display unit 8 is informed to the operator of the loom Li by telephone from the operator of the expert computer E and the loom operator eliminates the cause of abnormality of the loom Li on the basis of the "conclusion information".

Where the communication control computer T2 receives no "question information" after the transfer of the call command or within a predetermmined period of time after the transfer of "anwerr information", it stands ready for a new call command and where the communication control computer T1 receives no "question information" after the transferr of a call command or within a predetermined period of time after the transfer of "answer information", it erases the loom number "i" stored therein and comes to stand ready for a new call command.

Thus, by establishing a system of transmitting loom abnormality generating information and information required for the pursuit of the cause of abnormality directly from the loom control computer C1 to the expert computer E, the exchange of information between the two computers is facilitated and since there is only a little human intervention, almost no erroneous inputting of information takes place and accordingly, the diagnosis of abnormality of a loom can be performed quickly and accurately thereby improving the working efficiency of the loom.

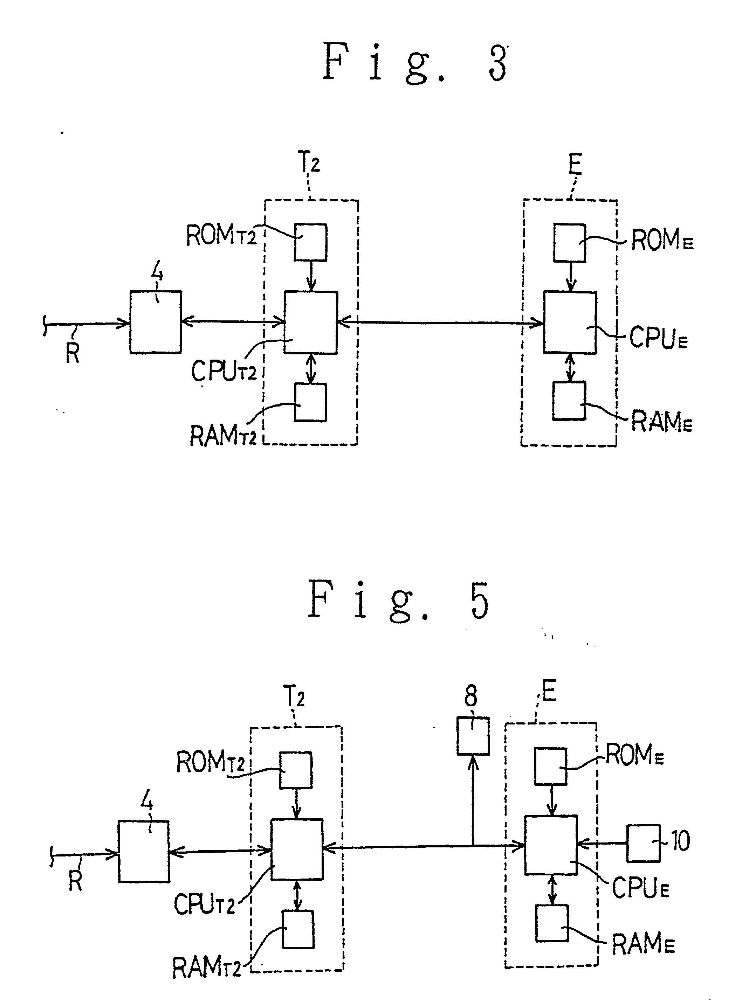

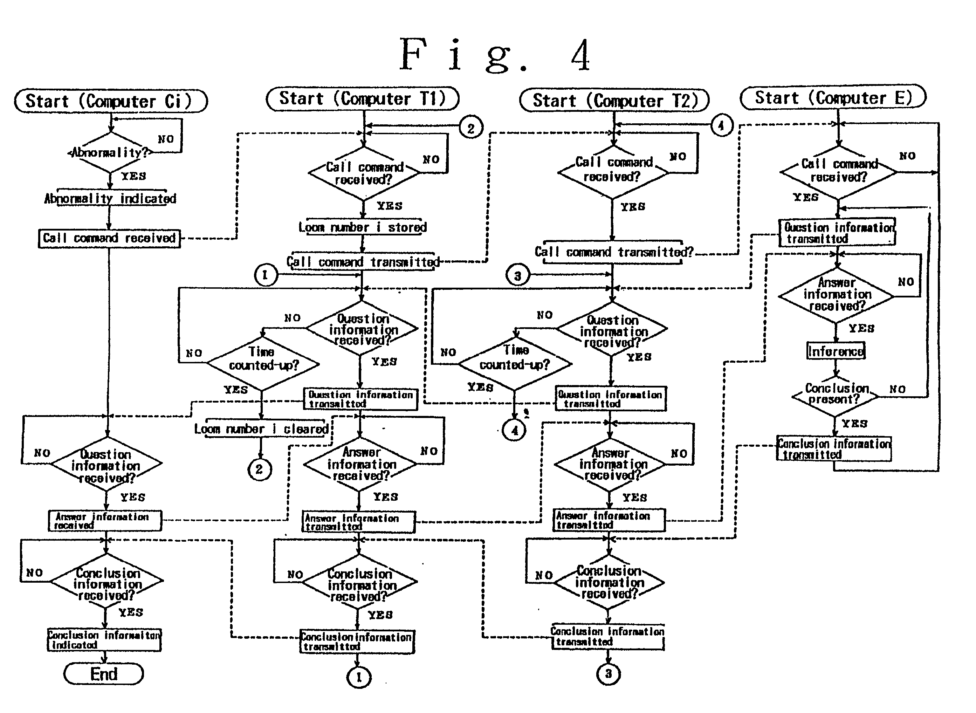

It goes without saying that the present invention is not always limited only to the above-mentioned embodiment but the embodiment shown in Figs. 3 and 4 in which the data inputting unit 7, display unit 8 and communication control operating unit 9 are omitted may also be made use of. Further, in this embodiment, the "answer informatin" transmitted to the communication control computer T2 is directly transferred to the expert computer E and the "conclusion information" from the expert computer E is transmitte to the loom control computer Ci as shown in a flow chart of Fig. 4. The "conclusion information" transmitted to the loom control computer Ci is then displayed on the display unit 6 and the loom operator eliminates the cause of abnormality of the loom Li on the basis of the "conclusion information" being displayed. Thus, according to this diagnosis system, the diagnosis of a loom abnormality is performed more quickly and accurately than the previous embodiment.

Further, it should be noted that although, in this embodiment, the operator eliminates the cause of a loom abnormality, if the cause is one of the conditions such as the timing of opening and closing the weft picking nozzle control electromagnetic valve inputted to the loom control computer, it is also possible to alter such condition upon reception of "conclusion information".

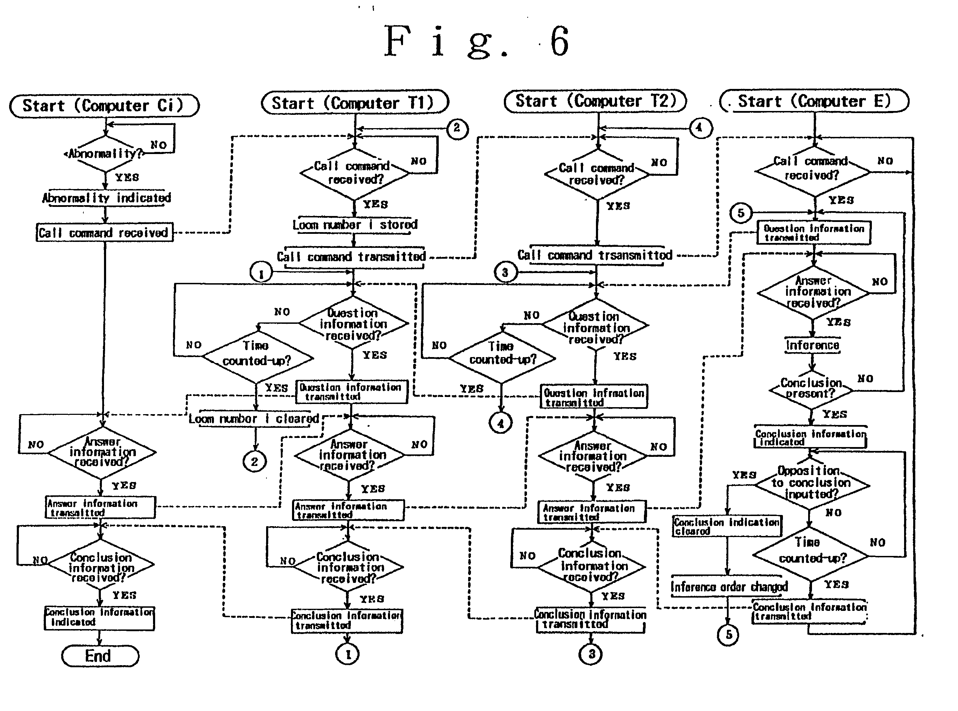

Moreover, it is also possible to make use of an embodiment in which an abnormality information input unit 10 is connected to the expert computer E as shown in Fig. 5 so that the "conclusion information" infered by the computer E can be negated as shown in a flow chart of Fig. 6. In this embodiment, the diagnosis system is so constructed that the process of inference by the expert computer E is displayed on the display unit 8 in sequence so that the operator of the expert computer E can judge the appropriateness of the "conclusion information" on the bases of such process of inference by the expert computer and his own experience and intervene in the diagnostic operation through the operation of an objection information input unit 10. Thus, by such objection intervention, the expert computer E erases the "conclusion information" being displayed and at the same thime, reads anoter "question information" thereby consecuting its inference. Then the computer E sets up another inference order in lieu of the one leading to the objected "conclusion information" and such new inference order is employed with respect to the same call command. This is a kind of learing system with which a more exact and speedy inference can be executed.

In addition, it is possible with the present invention to allow information to be exchanged between a host computer capable of concentrically controlling a number of looms by collecting various kinds of information therefrom and an expert computer, or to use a host computer which is incorporated with an expert function.

The loom failure diagnosis system comprises a loom information collecting device or computer (Ci) which receives (5) and stores loom operation information like data regarding speed, weft yarn breaks, warp yarn breaks, main and or axilliary nozzle pressure, warp let-off control and the like. The loom information collecting further receives information regarding said operating data of the loom (Li) by detecting means like sensors (1, 2). The information collecting device is able to decide on whether the loom is operating normal or abnormal. The system further comprises an expert device or computer (E) that contains information regarding correct setting of the loom. The information collecting computer (Ci) and the expert computer (E) are interconnected. The expert computer (E) has the ability to ask for information from the loom information collecting computer (Ci) and based on this information, to specify the causes for abnormal operation of the loom. The system allows for easy detection of improperly set operation parameters of the loom (Li).

## Claims

1. A loom diagnosis system comprising a loom information collecting computer (Ci) which receives and stores loom operation information such as a weft breakage, failure of weft picking and etc., through detecting means (1, 2) and also stores data on weaving conditions such as a weft picking control factor, warp let-off control factor and etc., and an expert computer (E) which is connected to the loom information collecting computer (Ci) through communication circuits (3, R, 4), and infers the cause of loom abnormality on the bases of said weaving conditions,

said loom information collecting computer (Ci) having a first transmission function of judging a loom abnormality on the basis of said loom operation information and transmitting abnormality information to said expert computer (E) when the presence of such loom abnormality is adjudged,

said expert computer (E) having a function of transmitting to said loom information collecting computer (Ci) question information in response to said abnormality information, and

said loom information collecting computer (Ci) having a second transmission function of transmitting answer information in response to said question information from said expert computer (E).

2. A loom diagnosis system comprising a loom information collecting computer (Ci, Ci+1, Ci+2) which receives and stores loom operation information preferably regarding weft breakage, failure of weft picking and the like, collected by detecting and/or sensor means (1, 2), and storing means (RAMi) for data regarding particular weaving conditions, preferably weft picking control factor, warp let-off control factor and the like,
further comprising an expert computer (E) which is connected to the loom information collecting computer (E) by communication circuits (Ti, $T_2 I_0$, $I_1$ 3, R, 4), said expert computer (E) inferring the cause of abnormal loom function on the bases of said collected information on weaving conditions,

said loom information collecting computer (Ci) having a first transmission function of judging a loom abnormality on the basis of said loom operation information and transmitting abnormality information to said expert computer (E) when the presence of such loom abnormality is adjudged,

said expert computer (E) having a function of transmitting to said loom information collecting computer (Ci) question information in response to said abnormality information, and

said loom information collecting computer (Ci) having a second transmission function of transmitting answer information in response to said question information from said expert computer (E).

3. A loom failure diagnosis system as claimed in claim 1 or claim 2, wherein said expert computer (E) determines and specifies the causes for failures of the loom on the basis of the data collected by said loom information collecting computer (Ci) that are compared with the data stored in said expert computer (E).

4. A loom failure diagnosis system as claimed in claim 3, wherein the data collected by the loom information collecting computer (Ci) and the data stored in the expert computer (E) are data regarding weft picking speed, in particular number of picks per minute and/or weft yarn insertion speed.

5. A loom failure diagnosis system as claimed in claim 3 or claim 4, wherein the data collected by the loom information collecting computer (Ci) and the data stored in the expert computer (E) are - or are in addition - weft yarn breakage frequency data.

6. A loom failure diagnosis system as claimed in one of claim 3 to 5, wherein the data collected by the loom information collecting computer (Ci) and the data stored in the expert computer (E) are - or are in addition - warp yarn breakage frequency data.

7. A loom failure diagnosis system as claimed in one of claim 3 to 6, wherein the data collected by the loom information collecting computer (Ci) and the data stored in the expert computer (E) are - or are in addition - warp let-off control data.

8. A loom failure diagnosis system as claimed in one of claim 3 to 7, for a fluid jet loom, wherein the data collected by the loom information collecting computer (Ci) and the data stored in the expert computer (E) are - or are in addition - weft picking nozzle pressure data.

9. A loom failure diagnosis system as claimed in one of claim 3 to 8, for a fluid jet loom, wherein the data collected by the loom information collecting computer (Ci) and the data stored in the expert computer (E) are - or are in addition - weft picking auxilliary nozzle pressure data.

10. A loom with a loom failure diagnosis system, claimed in one of claims 1 to 9.

Fig. 1

# Fig. 2

EP 0 461 078 A2

# Fig. 3

# Fig. 5

# Fig. 4

EP 0 461 078 A2

# Fig. 6

EP 0 461 078 A2